# FASCICULE DE BREVET EUROPEEN

(11) **EP 1 314 264 B1**
(45) Date de publication et mention de la délivrance du brevet: **10.11.2004**
(21) Numéro de dépôt: 01965356.7
(22) Date de dépôt: 27.08.2001
(51) Int. Cl.: H04B 10/00, H04J 14/02

(54) **PROCEDE ET DISPOSITIF DE PROTECTION D'UN RESEAU EN ANNEAU OPTIQUE WDM CENTRALISE**
VERFAHREN UND VORRICHTUNG ZUM SCHUTZ VON EINEM ZENTRALISIERTEN WDM-RINGNETZWERK
METHOD AND DEVICE FOR PROTECTING A CENTRALISED WDM OPTICAL RING NETWORK TRANSPORTING DATA FLOW IN CONNECTED MODE

(30) Priorité: 01.09.2000 FR 0011177
(43) Date de publication de la demande: 28.05.2003
(73) Titulaire: FRANCE TELECOM, 75015 Paris (FR)
(72) Inventeur: LELIGNE, Marc, F-22730 Tregastel (FR)
(74) Mandataire: Verdure, Stéphane
(86) Numéro de dépôt international: PCT/FR2001/002673
(87) Numéro de publication internationale: WO 2002/019570

(56) Documents cités:
- US-A- 6 088 141
- AMRANI A ET AL: "Optical monitoring system for scalable all-optical networks" SAN FRANSISCO, CA, NOV. 10 - 13, 1997,NEW YORK, NY: IEEE,US, 1996, pages 270-271, XP002134592 ISBN: 0-7803-3896-0

## Description

L'invention concerne un procédé et un dispositif de protection d'un réseau en anneau optique WDM centralisé transportant des flux de données en mode connecté, notamment des flux ATM.

Elle s'applique au domaine de la protection et de la maintenance des réseaux en anneau optique WDM (de l'anglais « Wavelenght Division Multiplexing » qui signifie multiplexage en longueur d'onde). Les seules hypothèses qui sont faites sont, d'une part, que le réseau en anneau optique WDM est centralisé et, d'autre part, qu'il transporte des flux de données en mode connecté.

Dans un réseau en anneau optique WDM centralisé, encore appelé boucle optique, la transmission du signal optique est unidirectionnelle. Dans la suite les termes « amont » » et « aval », « précédent » et « suivant », « adjacent », « précéder » et « suivre », sont utilisés en référence au sens de transmission des informations dans la boucle optique. Sur les figures, le sens de transmission des informations dans la boucle optique est repéré par des flèches sur la ou les fibres optiques concemée(s).

Le mode connecté signifie qu'une connexion (lien logique en mode connecté) doit être établie entre l'émetteur et le récepteur préalablement à la transmission d'un flux de données. Une fois la connexion établie, les unités de données transmises empruntent toutes le même chemin à travers le réseau (le chemin de la connexion) et parviennent au récepteur dans l'ordre de leur émission par l'émetteur.

Les applications des réseaux optiques WDM sont multiples: réseaux MAN (de l'anglais « Metropolitan Area Network »), réseaux dorsaux ATM (de l'anglais « Asynchronous Transfer Mode » qui signifie mode de transfert asynchrone), réseaux IP (de l'anglais « Internet protocol »), etc ... Actuellement, l'évolution s'oriente vers des réseaux de nouvelle génération appelés réseaux NGN (de l'anglais « Next Generation Network »). Le réseau NGN est un réseau de paquets qui, à terme, remplacera les autres réseaux en assurant l'interopérabilité avec les autres réseaux existants. L'architecture d'un réseau NGN pourrait s'appuyer sur des réseaux optiques en anneau WDM, notamment des réseaux en anneau optique WDM centralisé, pour raccorder les flux des divers réseaux d'accès. Le principe d'une boucle optique a déjà fait l'objet de nombreuses études comme celle du projet européen METON (de l'anglais « METropolitan Optical Network).

L'infrastructure optique d'une boucle optique est constituée de deux fibres : une fibre principale pour la transmission unidirectionnelle d'information sous forme d'un signal optique et l'autre pour la protection. Ces fibres relient un noeud central et des noeuds secondaires. Un tronçon de l'infrastructure optique reliant deux noeuds adjacents est appelé artère.

Au sens de la présente invention, on entend par protection du réseau une technique permettant de pallier la cassure d'une artère, afin d'assurer la continuité du service en attendant une opération de maintenance destinée à réparer l'artère détériorée. Cette technique consiste à commuter la fibre principale à la fibre de protection de manière à rétablir la structure d'un anneau optique reliant tous les noeuds du réseau. Dans ce cas, on dit que l'anneau est reconfigurable. Ceci peut se faire à partir d'une commande appropriée de commutateurs optiques situés aux extrémités de l'artère détériorée. A cet effet, chaque noeud du réseau comprend deux commutateurs optiques disposés l'un en amont et l'autre en aval des moyens de multiplexage et de démultiplexage optique du noeud considéré. Un protocole de commande des commutateurs optiques permet d'établir ou non la commutation optique de la fibre principale à la fibre de protection.

Dans l'état de la technique, ce protocole de commande est par exemple fondé sur un système de gestion centralisé. En général, un tel protocole repose sur la mise en oeuvre d'une ou de plusieurs longueurs d'ondes spécifiques, dédiées à la supervision du réseau. Cependant, ceci revient à surdimensionner le réseau et nécessite l'introduction de composants opto-électroniques supplémentaires dans le réseau, ce qui en augmente le coût.

Le document US-A-6 088 141 divulgue ainsi un protocole de commande fondé sur la présence ou l'absence de signal optique au niveau d'un noeud de réseau.

Plus récemment, la protection des réseaux en anneau optique WDM s'est orientée vers une technique de sur-modulation du signal électrique d'information en basse fréquence produisant un sur-débit. Cette technique a l'avantage d'être moins gourmande en longueur d'onde que la précédente; mais présente l'inconvénient d'être encore coûteuse et peu fiable.

L'invention a pour objet d'améliorer la protection d'un réseau en anneau optique WDM centralisé transportant des flux de données en mode connecté afin de pallier les inconvénients de l'art antérieur précités.

A cet effet, l'invention propose un procédé de protection d'un réseau en anneau WDM centralisé transportant des flux de données en mode connecté et comprenant une fibre optique principale pour la transmission unidirectionnelle d'informations sous la forme d'un signal optique et une fibre optique de protection qui relient un noeud central et des noeuds secondaires, consistant à commander des commutateurs optiques pour commuter la fibre optique principale à la fibre optique de protection en cas de cassure d'artère, dans lequel un commutateur optique amont et un commutateur optique aval de chaque noeud déterminé sont commandés selon un protocole de commande en fonction d'une première information sur l'état du support optique et de secondes informations sur l'état de connexions logiques de référence entre des noeuds déterminés du réseau.

Avantageusement, ladite première information et/ou lesdites secondes informations sont recueillies au niveau dudit noeud déterminé.

Ainsi, le protocole de commande est avantageusement mis en oeuvre au niveau dudit noeud déterminé.

Le procédé selon l'invention met en oeuvre au niveau de chaque noeud déterminé un protocole de commande des commutateurs optiques de ce noeud. Un tel protocole procure une gestion de la protection qui est répartie au niveau des noeuds au lieu d'être centralisée. On se dispense donc de l'exploitation de longueurs d'ondes spécifiques et d'une sur-modulation du signal d'information. De plus, on se dispense d'un système de gestion centralisé. Le coût de la maintenance du réseau est réduit.

La première information comprend préférentiellement une information binaire relative à la réception ou non d'un signal optique par le noeud déterminé via la fibre optique principale.

Les connexions logiques de référence comprennent de préférence une première connexion logique entre ledit noeud déterminé et lui-même, et une seconde connexion logique entre ledit noeud déterminé et le noeud suivant, dans l'anneau, par rapport au sens de transmission du signal optique sur la fibre optique principale.

Lorsque le réseau transporte des flux de données ATM, les connexions logiques de référence sont des circuits virtuels ATM ou des conduits virtuels ATM.

D'autres caractéristiques et avantages de l'invention apparaîtront encore à la lecture de la description qui va suivre. Celle-ci est purement illustrative et doit être lue en regard des dessins annexés, sur lesquels on a représenté :
- à la figure 1 : la topologie d'une boucle optique ;
- à la figure 2 : la topologie d'une boucle optique après une reconfiguration consécutive à une cassure d'artère ;
- aux figures 3a à 3c : la topologie d'une boucle optique dans trois plans déterminés en l'absence de cassure d'artère ;
- aux figures 4a à 4c : des schémas comparables à ceux des figures respectivement 3a à 3c, en présence d'une cassure d'artère ;
- à la figure 5 : un schéma décrivant le contenu de tables d'état mémorisées au niveau de chaque noeud de la boucle optique en présence d'une cassure d'artère ;
- à la figure 6 : le schéma d'un dispositif pour la mise en oeuvre du procédé selon l'invention au niveau d'un noeud secondaire ;
- à la figure 7 : le schéma d'un dispositif pour la mise en oeuvre du procédé selon l'invention au niveau du noeud central ;
- à la figure 8 : le modèle UIT-T pour l'architecture des réseaux ATM.

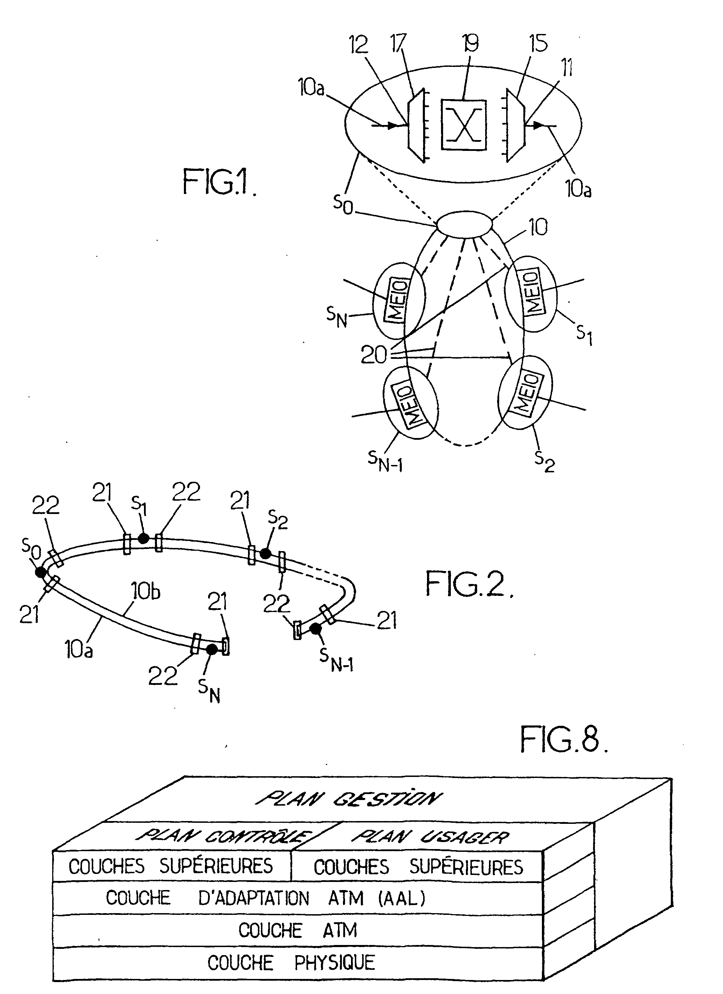

La figure 1 illustre la topologie d'une boucle optique. D'un point de vue infrastructure matérielle, la boucle optique comprend une paire 10 de fibres optiques, dont une fibre principale 10a pour la transmission unidirectionnelle d'informations sous la forme d'un signal optique et une fibre de protection (non visible à la figure 1). Ces fibres optiques relient un noeud principal S_{O} et des noeuds secondaires S₁ à S_{N} selon une structure en anneau. Un tronçon de la boucle optique reliant deux noeuds adjacents est appelé artère. D'un point de vue logique, le réseau peut être partiellement ou totalement maillé par des liens logiques en mode connecté, aussi appelés connexions logiques. Le noeud central et les noeuds secondaires peuvent en effet être reliés par des connexions logiques 20, respectivement associées à deux longueurs d'onde spécifiques (une pour chaque sens de communication) sur une infrastructure matérielle en anneau optique.

Dans la description d'un mode de réalisation qui suit le réseau transporte des flux ATM. Les connexions logiques sont alors des circuits virtuels ATM (VC, de l'anglais « Virtual Channel ») ou préférentiellement des conduits virtuels ATM (VP, de l'anglais « Virtual Path »). L'invention ne se limite pas toutefois à ce type de connexions logiques. En effet, le réseau peut aussi transporter des flux IP (de l'anglais "Internet Protocol"). Des réseaux connus transportant des flux IP reposent par exemple sur les protocoles tels que TCP/IP (de l'anglais « Transmission Control Protocol/Intemet Protocol ») qui définit le service de remise fiable en mode connecté de IP et qui est le plus, largement utilisé à ce jour, PPP/IP (de l'anglais « Point to Point Protocol/Internet Protocol ») qui est un protocole point à point sur IP, ou encore L2TP/IP (de l'anglais « Level 2 Tunnelling Protocol/Internet Protocol »), qui permet l'agrégation de plusieurs connexions PPP. Les unités de données transmises sont alors des paquets IP au lieu de cellules ATM. L'homme du métier appréciera que l'invention de se limite nullement à ces exemples. Elle s'applique en effet à tout réseau transportant des flux de données en mode connecté, pour lequel une connexion logique est établie entre l'émetteur et le récepteur avant la transmission des unités de données.

Le noeud principal S₀ comprend :
- un équipement 19 d'interconnexion et de routage, tel qu'un brasseur/commutateur ATM dans l'exemple de réalisation décrit. Cet équipement peut, en outre, être éventuellement connecté à un autre réseau ; et,
- des moyens de multiplexage et de démultiplexage optique.

Ces derniers comprennent :
- un multiplexeur optique 15 disposé à une première extrémité 11 de la fibre optique principale 10a de la boucle optique, en aval de l'équipement 19, et comprenant des transpondeurs avec une interface électrique/optique telle qu'une interface SDH (de l'anglais « Synchronous Digital Hierarchy ») ou une interface basée cellule (« cell-based » en anglais) ;
- un démultiplexeur optique 17 disposé à l'autre extrémité 12 de la fibre optique principale 10a de la boucle optique 10, en amont de l'équipement 19 et comportant P filtres optiques respectivement couplés à une photodiode avec le même type d'interface électrique/optique que pour le multiplexeur optique 15.

Le nombre P est un nombre entier qui désigne le nombre de longueurs d'ondes supportées par les moyens de multiplexage et de démultiplexage de l'équipement 19. Le nombre P est au moins égal au nombre N.

Chaque noeud secondaire S₁ à S_{N} comprend :
- un équipement d'interconnexion, tel qu'un brasseur ATM dans l'exemple de réalisation décrit où le réseau transporte des flux ATM ; et :

- des moyens de démultiplexage/démultiplexage optique.

Ces derniers sont constitués par un multiplexeur à insertion-extraction optique, ci-après MIEO, ayant pour fonction d'extraire et d'insérer une longueur d'onde parmi d'autres dans la fibre optique principale 10a sans reconversion électronique des informations qui sont transmises dans celle-ci sous forme de signal optique. Le MIEO comprend :
- un filtre optique sélectionnant une longueur d'onde déterminée parmi P longueurs d'onde différentes ;
- un transpondeur ayant une interface électrique en entrée, telle que, notamment, une interface SDH, une interface basée cellule (« cell-based » en anglais), une interface « Fast Ethernet » ou « Giga Ethernet », et une interface optique en sortie.

En raison du passage obligé par le noeud central S₀, avec reconversion électronique du signal optique au niveau de ce noeud, une transmission entre deux noeuds secondaires quelconques d'une même boucle optique se fait au moyen de deux longueurs d'onde spécifiques : l'une pour le lien logique entre le noeud secondaire émetteur et le noeud central, l'autre pour le lien logique entre le noeud central et le noeud secondaire récepteur.

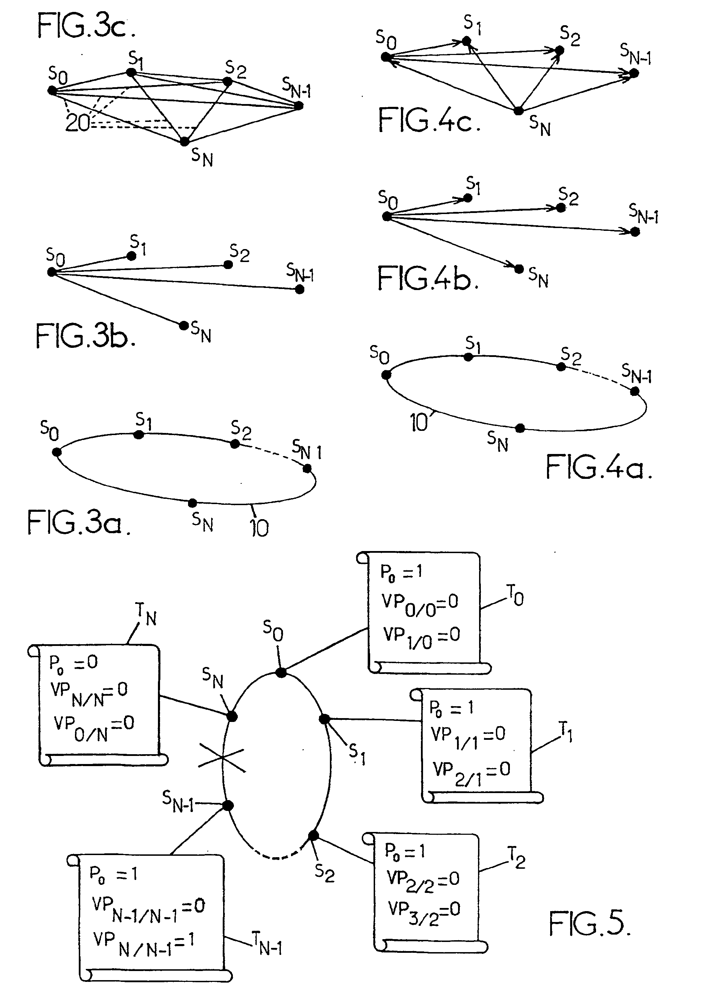

Puisque chaque noeud secondaire Sᵢ, où i est un indice compris entre les nombres entiers O et N, converge vers l'équipement d'interconnexion 19 du noeud principal S₀ via une longueur d'onde spécifique, la topologie d'un réseau en anneau optique WDM centralisé est celle d'une étoile virtuelle dans un plan en longueur d'onde (visible figure 3b) sur une infrastructure en anneau dans le plan optique (visible figure 3a).

De plus, comme le montre le schéma de la figure 2, chaque noeud Sᵢ du réseau (noeud central et noeuds secondaires), comprend un commutateur optique amont 21 et un commutateur optique aval 22, disposés respectivement en amont et en aval des moyens de multiplexage et de démultiplexage du noeud. Il s'agit par exemple de commutateurs optiques tels que ceux utilisés dans les réseaux FDDI (de l'anglais « Fiber Distributed Data Interface »).

Dans une position ouverte, qui est leur position par défaut, les commutateurs optiques isolent la fibre optique principale 10a de la fibre optique de protection 10b. Au niveau d'un commutateur aval 22 se trouvant dans une position fermée, le signal optique transmis dans la fibre principale 10a est envoyé dans la fibre de protection 10b. Au niveau d'un commutateur optique amont 21 se trouvant dans la position fermée, le signal transmis dans la fibre de protection 10b est envoyé dans la fibre principale 10a (en tenant compte du sens de transmission du signal optique dans cette demière).

Les commutateurs optiques peuvent être commandés selon un protocole de commande de manière à, dans la position fermée, commuter la fibre principale 10a à la fibre de protection 10b. Selon l'invention, on recueille au niveau de chaque noeud suffisamment d'informations pour commuter ou non la fibre principale à la fibre de protection grâce à l'un des commutateurs optiques du noeud. C'est pourquoi le protocole de commande des commutateurs optiques est mis en oeuvre au niveau de chaque noeud déterminé. Dit autrement, le protocole de commande selon l'invention n'est pas un protocole fondé sur un système de gestion centralisé comme les protocoles de l'art antérieur, mais un protocole local. Ce protocole assure la commande des deux commutateurs optiques du noeud indépendamment de ce qui est fait pour les autres noeuds.

Par analogie avec d'autres systèmes de traitement de l'information, on peut dire que l'intelligence est répartie sur chacun des noeuds pour permettre la protection du réseau dans son ensemble. La mise en oeuvre de ce protocole au niveau de chaque noeud du réseau selon le procédé de l'invention procure une protection de l'ensemble du réseau. Chaque noeud dispose de moyens matériels et logiciels nécessaires à cette mise en oeuvre. Ces moyens seront décrits plus loin.

Sur le schéma de la figure 2, la boucle optique est reconfigurée à la suite d'une cassure d'artère entre les noeuds S_{N-1} et S_{N}. Par souci de clarté, l'artère détériorée n'est pas représentée. La reconfiguration consiste à fermer le commutateur optique aval 22 du noeud S_{N-1} et le commutateur optique amont 21 du noeud S_{N}, de manière à commuter la fibre optique principale 10a à la fibre optique de protection 10b en ces points du réseau. De cette manière, la transmission du signal optique entre les noeuds S_{N-1} et S_{N}, qui ne peut se faire via la fibre optique principale 10a de l'artère détériorée, se fait via les commutateurs optiques précités et la fibre de protection 10b sur le trajet complémentaire (c'est à dire en faisant le tour par les autres noeuds), en quelque sorte à contre sens par rapport au sens de transmission du signal optique sur la fibre principale 10a. Sur la figure le sens de transmission sur chacune des fibres 10a et 10b est indiqué par une flèche. On rétablit ainsi la structure d'un anneau reliant tous les noeuds, ce qui assure la continuité du service.

La mise en oeuvre du protocole de commande des commutateurs nécessite que certaines informations soient disponibles au niveau de chaque noeud. Avant de définir ces informations, il convient de décrire l'état des connexions entre les noeuds du réseau avant et après une cassure d'artère. Dans chaque cas, on considère ce qui se passe dans trois plans distincts : un plan optique, un plan en longueur d'onde, et un plan logique.

Aux figures 3a à 3c, on a représenté schématiquement la topologie d'une boucle optique, respectivement dans le plan optique, dans le plan en longueur d'onde et dans le plan logique, en l'absence de cassure d'artère. Aux figures 4a à 4c, on a représenté ces topologies dans le cas d'une cassure d'artère entre les noeuds S_{N-1} et S_{N}. Sur les figures, cette cassure d'artère est symbolisée par une croix sur la figure 4a. Par convention, les traits droits reliant les noeuds dans le plan en longueur d'onde et dans le plan logique symbolisent une transmission bidirectionnelle entre ces noeuds. Toutefois, lorsque ces traits sont des flèches, ils symbolisent une transmission unidirectionnelle (dans le sens de la flèche) entre ces noeuds. On rappelle qu'une transmission bidirectionnelle entre deux noeuds du réseau requiert deux longueurs d'onde, une pour chaque sens de transmission. On rappelle aussi que la transmission dans le plan optique est unidirectionnelle, s'agissant d'un réseau en anneau optique WDM centralisé (sur les figures 3a et 4a le sens de transmission est symbolisé par une flèche).

Dans l'exemple représenté à la figure 3c, les connexions logiques 20 entre les noeuds du réseau S₀-S_{N} définissent un maillage complet du réseau. Ceci n'est toutefois pas obligatoire. En effet, l'invention ne nécessite qu'un maillage partiel du réseau car elle repose sur la prise en compte d'informations sur l'état de connexions logiques de référence, notées VP_{i/i}, VP_{i/i+1}, et VP_{N/O} (pour 1 i N ) dans la suite et aux figures, établies entre des noeuds déterminés du réseau. Une autre information est prise en compte. Il s'agit d'une information, notée Po dans la suite et aux figures, sur l'état du support optique. De préférence, ces informations sont recueillies au niveau du noeud déterminé correspondant Sᵢ. Préférentiellement, l'information Po comprend une information binaire relative à la réception ou non d'un signal optique par le noeud Sᵢ via la fibre optique principale 10a. Les connexions logiques de référence comprennent une première connexion logique entre le noeud Sᵢ et lui-même, et une seconde connexion logique entre le noeud Sᵢ et le noeud suivant Sᵢ₊₁, dans l'anneau, par rapport au sens de transmission du signal optique sur la fibre optique principale 10a. Ces informations sont de préférence mémorisées sous forme de variables binaires dans une table d'état Tᵢ stockée dans une mémoire d'un dispositif pour la mise en oeuvre du procédé.

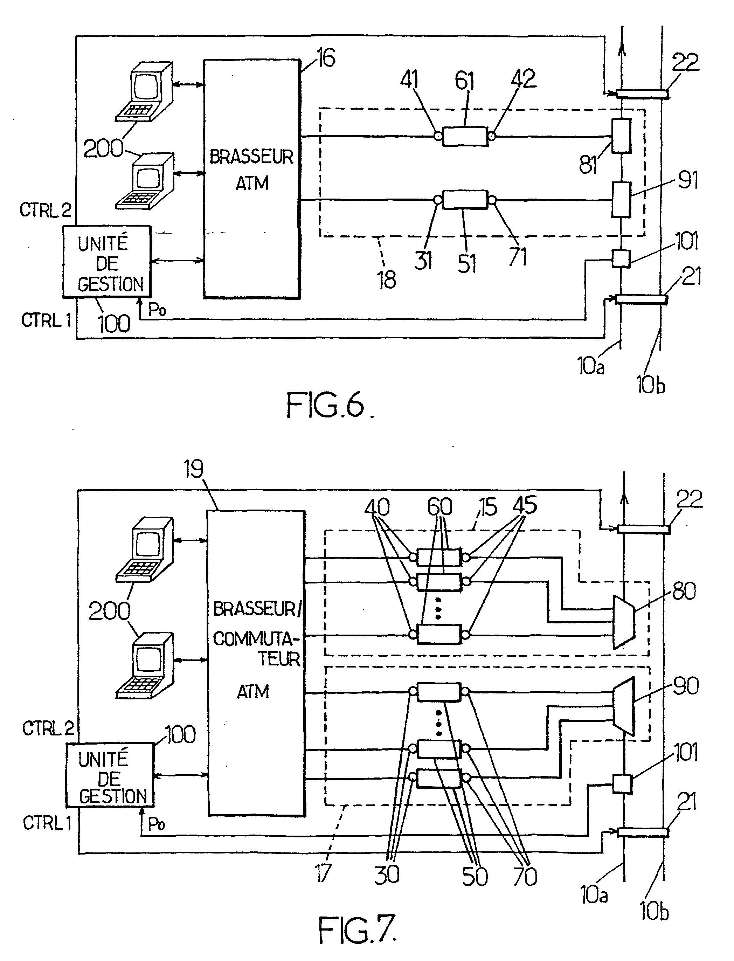

A la figure 5, on a représenté symboliquement l'état des tables de commande T₀ à T_{N} des noeuds respectivement S₀ à S_{N}, dans le cas envisagé plus haut d'une cassure d'artère entre les noeuds S_{N-1} et S_{N}. On rappelle que cette cassure doit entraîner la fermeture du commutateur optique amont 21 du noeud S_{N} et celle du commutateur optique aval 22 du noeud S_{N-1} pour assurer la reconfiguration du réseau (voir figure 2). Comme on peut le voir à la figure 5, la variable Po n'est plus marquée (Po = 0) dans la table T_{N} alors qu'elle l'est toujours dans les autres tables. On notera en particulier qu'elle est toujours marquée dans la table T₀ puisque le noeud S₀ reçoit un signal optique à la longueur d'onde propre au noeud S_{N} (voir figure 4b). En d'autres termes, le fait que la variable Po ne soit plus marquée dans la table T_{N} déterminée indique de manière univoque que la cassure est intervenue sur l'artère entre le noeud S_{N-1} et le noeud S_{N}. Cette information est utilisée par le protocole selon l'invention mis en oeuvre au niveau du noeud S_{N} pour commander la fermeture du commutateur optique amont 21 de ce noeud. Par contre on comprend que l'information donnée par la variable Po de la table T_{N-1} n'est pas suffisante pour que le protocole selon l'invention mis en oeuvre au niveau du noeud S_{N-1} commande la fermeture du commutateur optique aval 22 de ce noeud. Seule la prise en compte des informations issues du pian logique, c'est à dire de la couche cliente ATM dans l'exemple décrit ici, permet à ce protocole de disposer des informations nécessaires à cet effet. En effet, on constate que la table T_{N-1} est la seule table pour laquelle la variable VP_{N-1/N-1} n'est plus marquée alors que la variable VP_{N/N-1} l'est toujours. Cette configuration de ces variables indique de manière univoque que la coupure d'artère se situe en aval du noeud S_{N-1}. C'est pourquoi le protocole selon l'invention mis en oeuvre au niveau du noeud S_{N-1} a pour effet de fermer le commutateur optique aval 22 de ce noeud lorsque cette configuration de la table de commande T_{N-1} est reconnue.

Dans le cas général, le protocole de commande mis en oeuvre au niveau de chaque noeud Sᵢ de la boucle optique comporte les étapes qui vont maintenant être décrites. Cette description est valable pour tous les noeuds de la boucle optique (noeud principal ou noeuds secondaires). Néanmoins, on appréciera qu'il est parfois nécessaire, pour des raisons de notation, de distinguer le cas du noeud S_{N} de celui des autres noeuds Sᵢ pour 0≤i≤N-1, bien que le protocole de commande qui est mis en oeuvre soit le même que celui mis en oeuvre au niveau de chacun des autres noeuds.

On établit tout d'abord une première connexion logique de référence, ici un circuit virtuel ATM (VC ATM) ou un conduit virtuel ATM (VP ATM), entre le noeud Sᵢ considéré (pour 0≤i≤N) et lui-même (on entend ici bien entendu une connexion à travers le réseau). On établit également une seconde connexion logique de référence, par exemple de même nature que la précédente, entre le noeud secondaire Sᵢ (pour 1≤i≤N) considéré et le noeud précédent Sᵢ₋₁ de la boucle optique, ou en ce qui concerne le noeud central S₀ entre ce dernier et le noeud secondaire S_{N} qui le précède dans la boucle optique.

Dans une mémoire de l'unité de gestion, on alloue alors l'espace mémoire nécessaire pour mémoriser une table d'état Tᵢ contenant trois variables notées respectivement Po, VP_{i/i}, et VP_{i+1/i} pour les noeuds secondaires Sᵢ (0≤i≤N-1) ou VP_{0/N} pour le noeud S_{N}. On initialise ces trois variables en les marquant (Po=1 ; VP_{i/i}=1 ; et VP_{i+1/i}=1 pour la table Tᵢ avec 0≤i≤N-1 ou VP_{0/N} = 1 pour la table T_{N} du noeud S_{N}).

La variable Po indique l'absence (Po=0) ou à la présence (Po=1) de signal optique reçu par la fibre principale 10a au niveau du noeud considéré S_{i,} indépendamment de la (ou des) longueur(s) d'onde de ce signal. La variable VP_{i/i} (pour 0≤i≤N) indique l'état normal (VP_{i/i} =1) ou la panne (VP_{i/i} = 0) de la première connexion logique de référence. La variable VP_{i+1/i} (pour 0≤i≤N-1) ou la variable VP_{0/N} indique de même l'état normal (VP_{i+1/i}=1 ou V_{0/N}=1) ou la panne (VP_{i+1/i}=0 ou VP_{0/N}=0) de la seconde connexion logique de référence.

Dans le cas général, l'état de la première et de la seconde connexions logiques de référence précitées est déterminé en transmettant en continu des informations prédéterminées (par exemple une suite de valeurs logiques 1 ou 0) à travers ces connexions. On observe les informations reçues par ces connexions logiques de référence au niveau du noeud considéré. Si aucune information n'est reçue ou si les informations reçues diffèrent des informations attendues, alors c'est que la connexion est en panne. Dans ce cas, la valeur de la variable correspondante est modifiée dans la table d'état Tᵢ. On notera que, dans l'exemple envisagé de connexions constituées par des VC ATM ou VP ATM, il suffit d'envoyer une cellule de gestion ATM dont le champs d'information peut éventuellement être vide, puisque la réception ou non d'une cellule contenant l'identificateur VCI ou VPI correspondant à l'adresse de l'émetteur suffit à caractériser l'état du VC ATM ou du VP ATM correspondant, indépendamment du contenu du champ d'information de cette cellule de gestion.

Parallèlement, on scrute la puissance optique du signal optique reçu au niveau du noeud Sᵢ considéré. Tant qu'un signal optique est reçu (indépendamment de sa longueur d'onde), la valeur de la variable Po est égale à 1 (Po=1). Par contre, dès lors que la puissance optique reçue est nulle, la valeur de la variable Po est égale à 0 (Po=0), car cela signifie que plus aucune longueur d'onde n'est reçue.

Des signaux de commande CTRL1 et CTRL2 (signaux électriques logiques) sont générés et appliqués sur des entrées de commande respectives du commutateur optique amont 21 et du commutateur optique aval 22. Dans un exemple, chaque commutateur optique est dans la position ouverte lorsque le signal de commande reçu sur son entrée de commande est à l'état logique 0 et il est dans la position fermée lorsque ce signal est à l'état logique 1. Par défaut, les signaux CTRL1 et CTRL2 sont à l'état logique 0.

On commande alors la fermeture éventuelle du commutateur optique amont 21 et du commutateur optique aval 22 au moyen des deux signaux de commande (signaux électriques) respectivement CTRL1 et CTRL2 de la manière suivante :

Aux noeuds Sᵢ pour 0≤i≤N-1 :
- si Po=1, VP_{i/i}=0 et VP_{i+1/i}=1, c'est que la cassure est entre les noeuds Sᵢ et Sᵢ₊₁, et alors on met le signal CTRL2 à l'état logique 1 (CTRL2=1), ce qui ferme le commutateur optique aval 22 du noeud Sᵢ, le commutateur optique amont 21 de ce noeud restant ouvert ;
- si Po=0, c'est que la coupure précède le noeud Sᵢ, i.e., est entre les noeuds Sᵢ₋₁ et Sᵢ, et alors on met le signal de commande CTRL1 à l'état logique 1 (CTRL1=1), ce qui ferme le commutateur optique amont 21 du noeud Sᵢ, le commutateur optique aval 22 de ce noeud restant ouvert ;
- dans tous les autres cas, on ne fait rien.

Au noeud S_{N} :
- si Po=1, VP_{N/N}=0 et VP_{0/i}=1, c'est que la cassure est entre les noeuds S_{N} et S₀, et alors on met le signal CTRL2 à l'état logique 1 (CTRL2=1), ce qui ferme le commutateur optique aval 22 du noeud S_{N}, le commutateur optique amont 21 de ce noeud restant ouvert ;
- si Po=0, c'est que la coupure précède le noeud S_{N}, i.e., est entre les noeuds S_{N-1} et S_{N}, et alors on met le signal de commande CTRL1 à l'état logique 1 (CTRL1=1), ce qui ferme le commutateur optique amont 21 du noeud S_{N}, le commutateur optique aval 22 de ce noeud restant ouvert ;
- dans tous les autres cas, on ne fait rien.

Dans certaines applications, il pourra être nécessaire de prendre en compte des informations supplémentaires afin de tenir compte d'évènements, distincts d'une cassure d'artère, pouvant être à l'origine de la panne d'une connexion logique de référence. Un tel événement est par exemple la panne d'un commutateur ATM.

A la figure 6 et à la figure 7, sur laquelle les mêmes éléments portent les mêmes références, on a représenté le schéma d'un dispositif pour la mise en oeuvre du protocole de commande décrit ci-dessus au niveau respectivement d'un noeud secondaire Sᵢ (1≤i≤N) et du noeud central S₀. En fait, ces deux dispositifs ne diffèrent que par la nature de l'équipement de réseau et des moyens de multiplexage et de démultiplexage optique du noeud.

A la figure 6, chaque noeud secondaire comporte un équipement d'interconnexion 16, tel qu'un brasseur ATM dans l'exemple de réalisation décrit, et des moyens de multiplexage/démultiplexage optique 18, tel qu'un MIEO.

L'équipement 16 est relié à un ou plusieurs terminaux d'utilisateur 200. Le MIEO 18 comprend une voie d'insertion optique et une voie d'extraction optique, fonctionnant chacune à une longueur d'onde déterminée, propre au noeud et au sens de communication avec le noeud central. Ces voies comprennent respectivement un coupleur optique 81 et un filtre optique 91 couplés à la fibre principale 10a entre le commutateur optique amont 21 et le commutateur optique aval 22.

La fibre optique d'entrée du coupleur optique 81 de la voie d'insertion est reliée à la sortie d'un transpondeur 61 à travers une interface optique 42. Un tel transpondeur est par exemple un laser adapté pour émettre un signal optique à une première longueur d'onde déterminée qui est la longueur d'onde associée au noeud déterminé et au sens de communication (allant du noeud secondaire considéré vers le noeud central). Ce transpondeur 61 reçoit les données à transmettre de l'équipement de réseau 16 à travers une interface 41 telle qu'une interface SDH. Une interface basée cellule convient également.

Le filtre optique 91 a pour fonction de sélectionner une seconde longueur d'onde déterminée, propre au noeud déterminé et au sens de communication (allant du noeud central vers le noeud secondaire déterminé). La sortie du filtre optique 91 est couplée à l'entrée d'un photodétecteur 51 tel qu'une photodiode à travers une interface optique 71. Le photodétecteur 51 a pour fonction d'effectuer la conversion optique/électrique des données extraites de la fibre principale 10a. Les données extraites sont alors transmises sous forme électrique à l'équipement de réseau 16, à travers une interface électrique 31 telle qu'une une interface SDH ou une interface basée cellule.

Selon l'invention, le dispositif comprend une unité de gestion 100 apte à délivrer un signal de commande CTRL1 qui est porté sur une entrée de commande du commutateur optique amont 21, et un signal de commande CTRL2 qui est porté sur une entrée de commande du commutateur optique aval 22. Le dispositif comprend en outre des moyens de détection de la présence ou de l'absence de signal optique sur la fibre optique principale 10a en amont du noeud déterminé. Ces moyens comprennent par exemple une photodiode 101 couplée à la fibre 10a entre le commutateur 21 et le commutateur 22 (mais en amont du coupleur 81). Dans une variante avantageuse, ces moyens sont intégrés au filtre optique 71. En effet, les filtres optiques disponibles sur le marché comportent en général une sortie logique dont l'état logique indique la présence ou l'absence d'énergie optique en entrée du filtre. Dans tous les cas, ces moyens produisent une information binaire relative à la présence ou absence de signal optique dans la fibre 10a au niveau du noeud déterminé. Cette information est fournie en entrée de l'unité de gestion et sa valeur binaire est mémorisée dans la variable Po de la table d'état Tᵢ. L'unité de gestion 100 est en outre reliée à l'équipement 16 pour la gestion de la première et de la seconde connexions logiques de référence selon l'invention. Le protocole de commande selon l'invention est mis en oeuvre dans l'unité de gestion 100 sous la forme d'un logiciel adapté.

A la figure 7, le dispositif pour la mise en oeuvre du protocole selon l'invention au niveau du noeud central S₀ comporte les mêmes moyens que ceux décrits à la figure 6. Seuls l'équipement de réseau et les équipements de multiplexage et de démultiplexage sont propres au noeud central et diffèrent de ceux des noeuds secondaires représentés sur ladite figure 6. En effet, l'équipement 16 de la figure 6 est remplacé à la figure 7 par l'équipement d'interconnexion et de commutation 19, constitué dans l'exemple de réalisation décrit par un brasseur/commutateur ATM. De plus, les moyens de multiplexage 15 du noeud central S₀ présentés plus haut en regard de la figure 1, sont ici constitués d'un multiplexeur optique 80. Le multiplexeur optique 80 est connecté comme le coupleur 81, mais comporte P fibres optiques d'entrée au lieu d'une seule. Ces entrées sont couplées à la sortie d'un banc de transpondeurs 60 comprenant P transpondeurs, un pour chaque longueur d'onde à travers des interfaces optiques 45 respectives. Les entrées de ces transpondeurs 60 sont reliées à des sorties de l'équipement 19, via des interfaces électriques appropriées 40, pour recevoir les données à transmettre sur la fibre optique 10a. Ces interfaces 40 sont par exemple des interfaces SDH ou des interfaces basées cellule. Les transpondeurs 60 ont pour fonction d'effectuer la conversion électrique/optique des données à transmettre. Il s'agit par exemple de lasers fonctionnant à des longueurs d'ondes respectives.

Les moyens de démultiplexage optique 17 (présentés plus haut en regard de la figure 1) comprennent un démultiplexeur optique 90 connecté comme le filtre optique 91 de la figure 6, mais comportant P fibres optiques de sortie au lieu d'une seule. Ces sorties sont reliées en entrée d'un banc de photodétecteurs 50 tels que des photodiodes, comprenant un photodétecteur pour chaque longueur d'onde, via des interfaces optiques 70 respectives. Les sorties des photodétecteurs 50 sont reliées à l'équipement 19, via des interfaces électriques 30 adaptées, pour délivrer à cet équipement, sous la forme de signaux électriques, les données transmises sous forme optique sur la fibre optique 10a. Ces interfaces 30 sont par exemple des interfaces SDH ou des interfaces basées cellule.

Dit autrement, les moyens de multiplexage 15 du dispositif de la figure 7 remplissent une fonction similaire à celle de la voie d'insertion 61-81 du MIEO 18 de la figure 6, et les moyens de démultiplexage 17 du dispositif de la figure 7 remplissent une fonction similaire à celle de la voie d'extraction 51-91 du MIEO 18 de la figure 6, mais pour P longueurs d'ondes au lieu d'une seulement.

L'invention a été décrite dans l'exemple non limitatif d'un réseau transportant des flux de données ATM. En effet, la technique ATM (de l'anglais « Asynchronous Transfer Mode »), qui est basée sur le multiplexage temporel asynchrone (ATDM, de l'anglais « Asynchronouss Time Division Multiplexing ») et la commutation de cellule, est le mode de transfert des réseaux du futur. L'information est transportée par des unités de données appelées cellules, dont la taille est fixée. La figure 8 montre le modèle UIT-T (Union Internationale des Télécommunication-Standardisation du secteur des Télécommunications) pour l'architecture des réseaux à commutation de cellule. C'est un modèle à trois couches. La couche la plus basse est la couche physique. Elle concerne les protocoles de niveau physique qui dépendent du support physique (ici le support est une fibre optique). Elle assure un service de transmission des cellules sur le support physique. La deuxième couche, ou couche ATM, est celle de l'ATM proprement dit. Elle gère le transport de bout en bout de la cellule. Elle est commune à tous les services. La troisième couche est la couche d'adaptation ATM ou couche AAL (de l'anglais « ATM Adaptation Layer), qui se charge de l'interface avec les couches supérieures, qui sont les couches de protocole situées chez l'utilisateur. Le modèle UIT-T distingue, à côté du plan utilisateur, le plan de gestion et le plan de contrôle. Le plan utilisateur concerne la transmission des données des utilisateurs. Le plan de gestion offre des fonctions de gestion concernant les ressources et paramètres des protocoles. Il s'occupe des flux OAM (de l'anglais « Operation And Maintenance ») de chaque couche. Le plan de contrôle du modèle UIT-T est celui des protocoles de signalisation nécessaires à l'ouverture, au maintien et à la libération des connexions ATM.

La figure 8 permet d'illustrer une caractéristique de l'invention, à savoir que le protocole de commande des commutateurs optiques est mis en oeuvre au niveau de chaque noeud du réseau en fonction d'une information provenant de la couche physique d'une part et d'informations provenant de la couche ATM d'autre part. La première information est relative à l'état du support optique (déterminé par exemple par la présence ou absence de signal optique sur le support physique en amont du noeud considéré). Les secondes informations sont relatives à l'état des connexions logiques de référence.

## Revendications

1. Procédé de protection d'un réseau en anneau WDM centralisé transportant des flux de données en mode connecté, et comprenant une fibre optique principale (10a) pour la transmission unidirectionnelle d'informations sous la forme d'un signal optique et une fibre optique de protection (10b) qui relient un noeud central (S₀) et des noeuds secondaires (S₁-S_{N}), consistant à commander des commutateurs optiques (21,22) pour commuter la fibre optique principale (10a) à la fibre optique de protection (10b) en cas de cassure d'artère, dans lequel un commutateur optique amont (21) et un commutateur optique aval (22) de chaque noeud déterminé (Si) sont commandés selon un protocole de commande **caractérisé en ce que** le protocole de commande des commutateurs optiques (21, 22) est en fonction d'une première information (Po) sur l'état du support optique et de secondes informations (VP_{i/i} ; VP_{i/i+1},VP_{N/O}) sur l'état de connexions logiques de référence entre des noeuds déterminés du réseau.

2. Procédé selon la revendication 1 dans lequel ladite première information (Po) et/ou lesdites secondes informations (VP_{i/i} ; VP_{i/i+1},VP_{N/O}) sont recueillies au niveau dudit noeud déterminé (Sᵢ).

3. Procédé selon la revendication 1 ou la revendication 2, dans lequel le protocole de commande est mis en oeuvre au niveau dudit noeud déterminé (Sᵢ).

4. Procédé selon l'une des revendications 1 à 3, dans lequel ladite première information comprend une information binaire (Po) relative à la réception ou non d'un signal optique par le noeud déterminé via la fibre optique principale (10a).

5. Procédé selon l'une quelconque des revendications 1 à 4, dans lequel lesdites connexions logiques de référence comprennent une première connexion logique entre ledit noeud déterminé et lui-même, et une seconde connexion logique entre ledit noeud déterminé et le noeud suivant, dans l'anneau, par rapport au sens de transmission du signal optique sur la fibre optique principale.

6. Procédé selon l'une quelconque des revendications 1 à 5, dans lequel, le réseau transportant des flux de données ATM, les connexions logiques de référence sont des circuits virtuels ATM ou des conduits virtuels ATM.

7. Dispositif pour la mise en oeuvre d'un procédé selon l'une quelconque des revendications 1 à 6 au niveau d'un noeud principal (S₀) du réseau comprenant un équipement d'interconnexion et de commutation (19), des moyens de multiplexage optique (15) et des moyens de démultiplexage optique (17), le dispositif comprenant :
- des moyens (101) de détection de la présence ou de l'absence de signal optique en entrée du noeud principal ;
- une unité de gestion (100) qui est reliée à l'équipement d'interconnexion et de commutation (19) et **caractérisé en ce que** l'unité de gestion comprend des moyens de gestion des connexions logiques de référence pour en déduire les informations (VP_{0/0} ; VP_{0/1}) sur l'état desdites connexions de référence, qui est en outre reliée audits moyens de détection pour recevoir l'information (Po) sur l'état du support optique, et qui comprend des moyens pour la mise en oeuvre du protocole de commande.

8. Dispositif selon la revendication 7 dans lequel l'unité de gestion (100) comprend des moyens de mémorisation pour mémoriser une table d'état (Tᵢ) contenant l'information (Po) sur l'état du support optique et les informations (VP_{i/i} ; VP_{i/i+1},VP_{N/O}) sur l'état des connexions logiques de référence.

9. Dispositif selon l'une quelconque des revendications 7 ou 8, dans lequel, les moyens de démultiplexage (17) comprenant au moins un filtre optique, les moyens de détection de la présence ou de l'absence de signal optique en entrée du noeud principal sont intégrés audit filtre.

10. Dispositif pour la mise en oeuvre d'un procédé selon l'une quelconque des revendications 1 à 6 au niveau d'un noeud secondaire (S₁-S_{N}) du réseau comprenant un équipement d'interconnexion (16), des moyens de multiplexage/démultiplexage optique (18), le dispositif comprenant :
- des moyens (101) de détection de la présence ou de l'absence de signal optique en entrée du noeud principal ;
- une unité de gestion (100) qui est reliée à l'équipement d'interconnexion (16) et **caractérisé en ce que** l'unité de gestion comprend des moyens de gestion des connexions logiques de référence pour en déduire les informations (VP_{i/i} ; VP_{i/i+1},VP_{N/O}) sur l'état desdites connexions de référence, qui est en outre reliée audits moyens de détection (101) pour recevoir l'information (Po) sur l'état du support optique, et qui comprend en outre des moyens pour la mise en oeuvre du protocole de commande.

11. Dispositif selon la revendication 10 dans lequel l'unité de gestion comprend des moyens de mémorisation pour mémoriser une table d'état (Tᵢ) contenant l'information (Po) sur l'état du support optique et les informations (VP_{i/i} ; VP_{i/i+1},VP_{N/O}) sur l'état des connexions logiques de référence.

12. Dispositif selon l'une quelconque des revendications 10 ou 11, dans lequel, les moyens de multiplexage/démultiplexage (16) comprenant un filtre optique (71), les moyens de détection de la présence ou de l'absence de signal optique en entrée du noeud principal sont intégrés audit filtre optique (71).

## Patentansprüche

1. Verfahren zum Schutz eines zentralisierten WDM-Ringnetzwerks, welches Datenflüsse im verbundenen Modus befördert und eine optische Hauptfaser (10a) für die unidirektionale Übertragung von Informationen in Form eines optischen Signals und eine optische Schutzfaser (10b) umfasst, welche einen zentralen Knoten (S₀) und sekundäre Knoten (S₁ - S_{N}) verbinden, welches darin beruht, optische Schalter (21, 22) zu steuern, um die optische Hauptfaser (10a) auf die optische Schutzfaser (10b) im Falle eines Arterienbruchs umzuschalten, in welchem ein stromaufwärtiger optischer Schalter und ein stromabwärtiger optischer Schalter (22) eines festgelegten Knotens (Sᵢ) nach einem Steuerprotokoll gesteuert werden, **dadurch gekennzeichnet, dass** das Steuerprotokoll der optischen Schalter (21, 22) Funktion einer ersten Information (Po) über den Zustand des optischen Trägers und von zweiten Informationen (VP_{i/i}; VP_{i/i+1}; VP_{N/O}) über den Zustand von logischen Referenzverbindungen zwischen festgelegten Knoten des Netzes ist.

2. Verfahren nach Anspruch 1, bei dem die erste Information (Po) und/oder die zweiten Informationen (VP_{i/i}; VP_{i/i+1}; VP_{N/O}) an dem festgelegten Knoten (Sᵢ) aufgefangen werden.

3. Verfahren nach Anspruch 1 oder Anspruch 2, bei dem das Steuerprotokoll an dem festgelegten Knoten (Sᵢ) ausgeführt wird.

4. Verfahren nach einem der Ansprüche 1 bis 3, bei dem die erste Information eine binäre Information (Po) betreffend den Empfang oder Nichtempfang eines optischen Signals durch den festgelegten Knoten über die optische Hauptfaser (10a) umfasst.

5. Verfahren nach einem beliebigen der Ansprüche 1 bis 4, bei dem die logischen Referenzverbindungen eine erste logische Verbindung zwischen dem festgelegten Knoten und ihm selbst und eine zweite logische Verbindung zwischen dem festgelegten Knoten und dem in dem Ring in Bezug auf die Übertragungsrichtung des optischen Signals auf der optischen Hauptfaser nachfolgenden Knoten umfassen.

6. Verfahren nach einem beliebigen der Ansprüche 1 bis 5, bei dem, wenn das Netz ATM-Datenflüsse transportiert, die logischen Referenzverbindungen virtuelle ATM-Kanäle oder virtuelle ATM-Pfade sind.

7. Vorrichtung zur Durchführung eines Verfahrens nach einem beliebigen der Ansprüche 1 bis 6 an einem Hauptknoten (S₀) des Netzes, umfassend eine Verbindungs- und Schalteinrichtung (19), optische Multiplexmittel (15) und optische Demultiplexmittel (17), wobei die Vorrichtung umfasst:
- Mittel (101) zum Erfassen des Vorhandenseins oder des Nichtvorhandenseins eines optischen Signals am Eingang des Hauptknotens;
- eine Verwaltungseinheit (100), die mit der Verbindungs- und Schalteinrichtung (19) verbunden ist,
**dadurch gekennzeichnet, dass** die Verwaltungseinheit Mittel zur Verwaltung von logischen Referenzverbindungen umfasst, um davon Informationen (VP_{0/0}; VP_{0/1}) über den Zustand der Referenzverbindungen abzuleiten, dass sie ferner mit den Erfassungsmitteln zum Empfangen der Information (Po) über den Zustand des optischen Trägers verbunden ist und dass sie Mittel für die Anwendung des Steuerprotokolls umfasst.

8. Vorrichtung nach Anspruch 7, bei der die Verwaltungseinheit (100) Speichermittel zum Speichern einer Zustandstabelle (Tᵢ) umfasst, welche die Information (Po) über den Zustand des optischen Trägers und die Informationen (VP_{i/i}; VP_{i/i+1}; VP_{N/O}) über den Zustand der logischen Referenzverbindungen enthält.

9. Verfahren nach einem beliebigen der Ansprüche 7 oder 8, bei der, wenn die Demultiplexmittel_(17) wenigstens ein optisches Filter umfassen, die Mittel zum Erfassen des Vorhandenseins oder Nichtvorhandenseins des optischen Signals am Eingang des Hauptknotens in das Filter integriert sind.

10. Vorrichtung zur Durchführung eines Verfahrens nach einem beliebigen der Ansprüche 1 bis 6 an einem Sekundärknoten (S₁ bis S_{N}) des Netzes, welcher eine Verbindungseinrichtung (16), optische Multiplex-/Demultiplexmittel (18) umfasst, wobei die Vorrichtung umfasst:
- Mittel (101) zum Erfassen des Vorhandenseins oder Nichtvorhandenseins eines optischen Signals am Eingang des Hauptknotens;
- eine Verwaltungseinheit (100), die mit der Verbindungseinrichtung (16) verbunden ist,
**dadurch gekennzeichnet, dass** die Verwaltungseinheit Mittel zur Verwaltung von logischen Referenzverbindungen umfasst, um von diesen die Informationen (VP_{i/i}; VP_{i/i+1}; VP_{N/O}) über den Zustand der Referenzverbindungen abzuleiten, dass sie ferner mit den Erfassungsmitteln (101) zum Empfangen der Information (Po) über den Zustand des optischen Trägers verbunden ist und dass sie ferner Mittel zur Anwendung des Steuerprotokolls umfasst.

11. Vorrichtung nach Anspruch 10, bei der die Verwaltungseinheit Speichermittel zum Speichern einer Zustandstabelle (Tᵢ) umfasst, die die Information (Po) über den Zustand des optischen Trägers und die Informationen (VP_{i/i}; VP_{i/i+1}; VP_{N/O}) über den Zustand der logischen Referenzverbindungen enthält.

12. Vorrichtungen nach einem beliebigen der Ansprüche 10 oder 11, bei der, wenn die Multiplex-/Demultiplexmittel (16) ein optisches Filter (71) umfassen, die Mittel zum Erfassen des Vorhandenseins oder Nichtvorhandenseins des optischen Signals am Eingang des Hauptknotens in das optische Filter (71) integriert sind.

## Claims

1. Method of protecting a centralised WDM ring network which transports data streams in connected mode and comprises a main optical fibre (10a) for the one-way transmission of information in the form of an optical signal and a protective optical fibre (10b) which connect a central node (S₀) and secondary nodes (S₁-S_{N}), consisting of controlling optical switches (21, 22) in order to switch the main optical fibre (10a) to the protective optical fibre (10b) in the event of route rupture, in which an upstream optical switch (21) and a downstream optical switch (22) of each specific node (Sᵢ) are controlled according to a control protocol, **characterised in that** the control protocol of the optical switches (21, 22) is as a function of a first information item (Po) concerning the status of the optical support and of second information items (VP_{i/i}; VP_{i/i+1}, VP_{N/O}) concerning the status of reference logic connections between specific nodes of the network.

2. Method as claimed in Claim 1 in which the said first information item (Po) and/or the said second information items (VP_{i/i}; VP_{i/i+1}, VP_{N/O}) are collected at the level of the said specific node (Sᵢ).

3. Method as claimed in Claim 1 or Claim 2, in which the control protocol is implemented at the level of the said specific node (Sᵢ).

4. Method as claimed in any one of Claims 1 to 3, in which the said first information item comprises a binary information item (Po) relating to the reception or non-reception of an optical signal by the specific node via the main optical fibre (10a).

5. Method as claimed in any one of Claims 1 to 4, in which the said reference logic connections comprise a first logic connection between the said specific node and itself and a second logic connection between the said specific node and the following node in the ring with respect to the direction of transmission of the optical signal over the main optical fibre.

6. Method as claimed in any one of Claims 1 to 5, in which as the network transports ATM data streams the reference logic connections are virtual ATM circuits or virtual ATM conduits.

7. Device for carrying out a method as claimed in any one of Claims 1 to 6 at the level of a main node (S₀) of the network comprising an interconnection and switching unit (19), optical multiplexing means (15) and optical demultiplexing means (17), the device comprising:
- means (101) for detecting the presence or absence of an optical signal at the input of the main node;
- a management unit (100) which is connected to the interconnection and switching unit (19) and **characterised in that** the management unit comprises means for management of the reference logic connections in order to deduce therefrom information items (VP_{0/0}; VP_{0/1}) concerning the status of the said reference connections, which is furthermore connected to the said detection means in order to receive the information item (Po) concerning the status of the optical support, and which comprises means for implementing the control protocol.

8. Device as claimed in Claim 7, in which the management unit (100) comprises storage means for storing a status table (Tᵢ) containing the information item (Po) concerning the status of the optical support and the information items (VP_{i/i}; VP_{i/i+1}, VP_{N/O}) concerning the status of the reference logic connections.

9. Device as claimed in any one of Claims 7 or 8, in which, as the demultiplexing means (17) comprise at least one optical filter, the means for detection of the presence or absence of an optical signal at the input of the main node are integrated into the said filter.

10. Device for carrying out a method as claimed in any one of Claims 1 to 6 at the level of a secondary node (S₁-S_{N}) of the network comprising an interconnection unit (16) and means for optical multiplexing/demultiplexing (18), the device comprising:
- means (101) for detection of the presence or absence of an optical signal at the input of the main node;
- a management unit (100) which is connected to the interconnection unit (16) and
**characterised in that** the management unit comprises means for management of the reference logic connections in order to deduce therefrom the information items (VP_{i/i}; VP_{i/i+1}, VP_{N/O}) concerning the status of the said reference connections, which is furthermore connected to the said detection means (101) in order to receive the information item (Po) concerning the status of the optical support, and which furthermore comprises means for implementing the control protocol.

11. Device as claimed in Claim 10, in which the management unit comprises storage means for storing a status table (Tᵢ) containing the information item (Po) concerning the status of the optical support and the information items (VP_{i/i}; VP_{i/i+1}, VP_{N/O}) concerning the status of the reference logic connections.

12. Device as claimed in any one of Claims 10 or 11, in which, as the multiplexing/demultiplexing means (16) comprise an optical filter (71), the means for detection of the presence or absence of an optical signal at the input of the main node are integrated into the said optical filter (71).
